# EUROPEAN PATENT SPECIFICATION

(11) **EP 2 943 682 B1**
(45) Date of publication and mention of the grant of the patent: **07.11.2018**
(21) Application number: 14703411.0
(22) Date of filing: 03.01.2014
(51) Int. Cl.: F03D 13/20

(54) **SUPPORT STRUCTURE FOR ELECTRIC ENERGY EOLIAN GENERATORS OF VARIOUS KIND**
STÜTZSTRUKTUR FÜR WINDENERGIEGENERATOREN VERSCHIEDENER ART
STRUCTURE DE SUPPORT POUR GÉNÉRATEURS ÉOLIENS D'ÉNERGIE ÉLECTRIQUE DE DIVERS TYPES

(30) Priority: 09.01.2013 IT PN20130002
(43) Date of publication of application: 18.11.2015
(73) Proprietor: Interwind S.r.l., 33084 Cordenons (PN) (IT)
(72) Inventor: BARBARIN, Marco, 33170 Pordenone (IT); FAUSTO, Guglielmo, 73100 Lecce (IT)
(74) Representative: Dalla Rosa, Adriano
(86) International application number: PCT/IB2014/000006
(87) International publication number: WO 2014/108789

(56) References cited:
- WO-A1-2012/153137
- US-A- 4 590 718

## Description

The invention concerns a support structure for electric energy eolian generators of various kind, of modular type, which can be installed and applied in the ground into limited areas for ensuring an efficient and balanced support to such generators, such as to withstand with safety to the different atmospheric conditions.

From WO2012/153137A1 is known a wind turbine assembly comprising a wind turbine, an elongate mast having a longitudinal axis, the elongate mast further including a first end and a second end, a support structure, including one or more support members, and one or more anchoring means. In use, the wind turbine is connected to at or toward the first end of the elongate mast, the support structure is connected at or toward the second end of the elongate mast, the support members are operable to be arranged to extend radially outward from the longitudinal axis of the elongate mast, and wherein, the or each anchoring means is connected to the or each support member.

From US 4,590,718 is known a portable, adjustable structure for supporting an equipment unit at a distance above a support surface has a lower tower structural member placed on the support surface. Pivot support structural members are affixed to the lower tower structural member in a manner whereby the pivot support structural members are upright relative to the support surface.

A plurality of struts are utilized to stabilize the lower tower structural member and the pivot support structural members on the support surface. A tower member is pivotally mounted on the pivot support structural members. The tower member has spaced opposite first and second ends.

The equipment unit is affixed to the tower member at the first end thereof. The tower member is pivotally movable to a position substantially perpendicular to the support surface with the first end thereof spaced farther from the support surface than the second end thereof. Ballast is affixed to the tower member at the second end thereof. The second end of the tower member is coupled to the lower tower structural member whereby the tower member is normally upright and is pivotable, upon uncoupling of the tower member and the lower tower structural member, to position the equipment unit close to the support surface for maintenance and repair.

The object of the present invention is to realize a support structure for electric energy eolian generators made in a manner different than that disclosed the state of the art represented by WO2012/153137A1 and by US4590718A.

The support structure according to this invention is realized with the constructive characteristics substantially described, with particular reference to the attached patent claims.

The invention will be better understood from the following description, that is given by way of non-limiting example and with reference to the accompanying drawings, in which :
- Figure 1 shows a perspective front view of a support structure according to the present invention, in a first embodiment thereof, which is installed in an upright position and supports at its upper part an electric energy eolian generator, with the relative rotating vanes actuated by the wind ;
- Figure 2 shows a perspective front view of a portion of a component part of the support structure of Figure 1 ;
- Figure 3 shows a perspective front view of the portion of the component part of Figure 2, assembled with an additional component part of the structure ;
- Figure 4 shows a perspective side and enlarged view of the component parts assembled to each other of the Figures 2 and 3 ;
- Figure 5 shows a perspective front view of a set of portions of the component parts of the Figure 2, assembled to each other in the lower area of the support structure, and shifted in an operative position thereof;
- Figure 6 shows a perspective side view of the portions of the component parts of Figure 5, shifted in another operative position thereof;
- Figure 7 shows a perspective front view of some portions of the component parts assembled to each other of the support structure according to the invention ;
- Figure 8 shows a front view of the component parts of Figure 7 and of additional component parts assembled with these latter, in an assembling position of the present support structure ;
- Figure 9 shows a front view of the component parts of Figure 7 assembled to each other, in a subsequent assembling position of the present support structure ;
- Figure 10 shows a perspective front view of all the component parts assembled to each other of the support structure, at the end of the assembling of the same, and of all the component parts of the eolian generator supported by such support structure ;
- Figure 11 shows a plan view of all component parts of the support structure and the eolian generator of Figure 10 ;
- Figure 12 shows a perspective front view of the support structure according to a second example, which is installed in an upright position thereof and supports at its upper part an electric energy eolian generator, with the relative rotating vanes actuated by the wind ;
- Figure 13 shows a front view with another angle of the assembly support structure - eolian generator of the Figure 12 ;
- Figure 14 shows a perspective front view of a component part of the support structure of the Figure 12, assembled with other component parts of the same structure, of which only a portion is shown;
- Figure 15 shows a perspective front view of the inner structure of the component part of Figure 14, before this latter be formed ;
- Figure 16 shows a perspective front view of two component parts of Figure 14, assembled with other component parts of the support structure, of which only a portion is shown ;
- Figure 17 shows a front view of the support structure with the eolian generator of Figure 13, in an assembled position thereof;
- Figure 18 shows a perspective front and enlarged view of a portion of the support structure of Figure 17, in the same assembled position ;
- Figure 19 shows a perspective front view of the support structure of the Figures 17 and 18, in a subsequently assembled position thereof;
- Figure 20 shows a perspective front view of a portion of the support structure of the Figure 12, in the upright position thereof;
- Figure 21 shows a plan view of the support structure in the upright position thereof of the Figures 12 and 20.

In the above Figures, it is illustrated a support structure according the present invention, adapted to support electric energy eolian generators of various kind, made with relatively limited sizes, provided for generating electric energy, particularly for being installed near inhabited environments, and preset for operating also under condition of strong wind, in order to generate electric energy for the use into the same environments, or also for the use by other users. These eolian generators, naturally, may be realized also with greater sizes for being installed, alone or together with other analogous eolian generators, at places far-away from the inhabited areas in order to generate electric energy in a sufficient quantity for supplying a high numbers of consumers.

Each eolian generator 5 is substantially constituted as usual by a synchronous electric generator (not shown), formed by a movable circular rotor and by a stationary circular stator (both not shown), which are contained into a stationary and metallic box-like envelope 6, supported as it will be described onto the metallic support structure 7 of the present invention, and into which box-like envelope 6 a metallic rotor 8 is housed and supported, which is rotating with respect to this latter, which rotor is mechanically connected to the electric generator rotor and supports a set of rotating vanes 9, spaced away to each other of the same angular interval along the circumference of the rotor 8, and opportunely profiled, which vanes 9 during the installation of the eolian generator are so oriented as to receive the wind thrust with the highest possible intensity, in such a way that such vanes be actuated in rotation by the wind thrust, thereby determining the rotation of the electric generator rotor and therefore generating the electric energy by electromagnetic induction.

Onto the metallic rotor 8 and onto the upper part of the support structure 7 it is also fixed in an articulated manner the front end portion of at least one rectilinear and lengthened metallic rod 10, at the rear end portion of which a metallic tail 11 is fixed and formed by a shaped plate 12 adapted to be impacted by the wind and to be shifted from time to time in the direction from which the wind arrives, in a manner to determine a correspondent rotation of the rod 10 and the metallic rotor 8, and therefore also of the rotating vanes 9, so as to orient continuously these latter in such a direction as to receive the maximum wind thrust.

By way of a not-limiting example only, an eolian generator of this kind may be constituted by the eolian generator which is described, illustrated and claimed in the patent application for industrial invention n. PN2011A000075, filed on 18.11.2011 by the same Applicant, to which therefore reference is made for a better comprehension of the constructive and structural characteristics of the same generator. Naturally, the eolian generator supported by the present support structure may be realized also with characteristics which are different than those of the eolian generator described in the above-mentioned patent application, thus without departing from the protection sphere of the present invention.

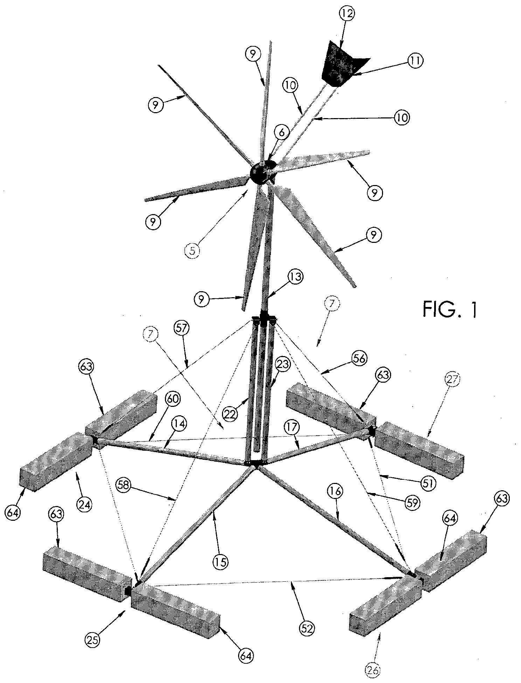

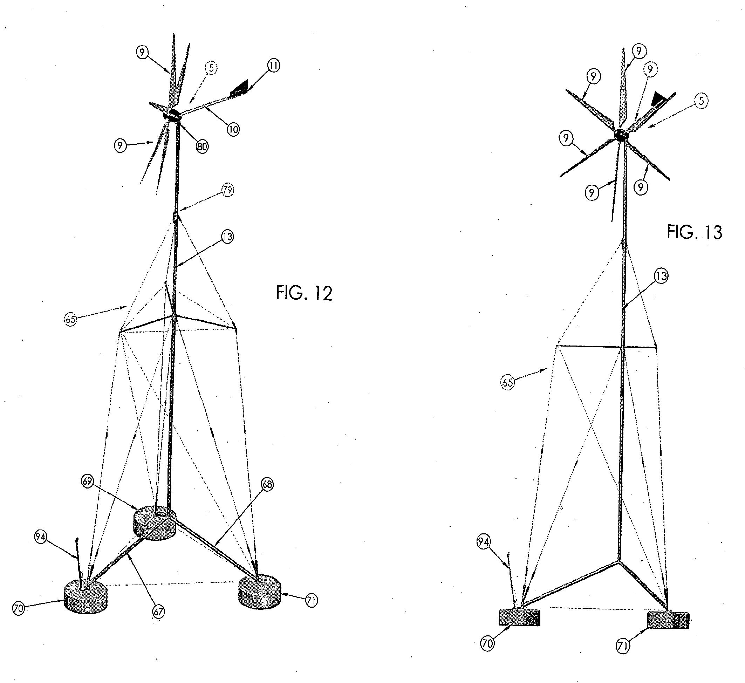

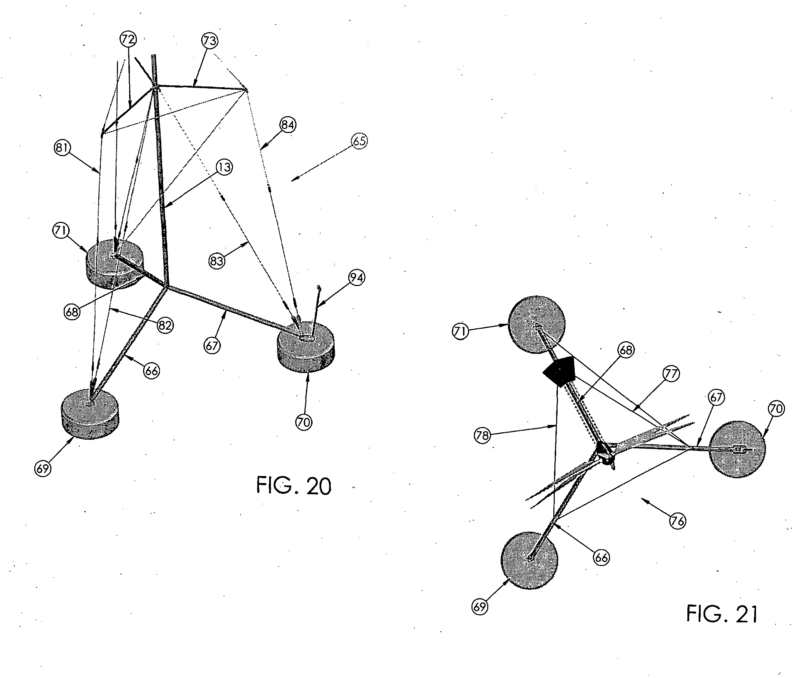

Now, the support structure 7 according the invention is described and how the same structure is assembled and mounted in an upright position in the relative installation position, and in particular the Figures 1-11 show a first embodiment of this support structure, with its various component parts and the different assembling phases of the same, together with the eolian generator supported by the same structure, whereas in the Figures 12-21 a second embodiment of this support structure is shown, with its various component parts and the different assembling phases of the same, together with the eolian generator supported by the same structure.

Figure 1 illustrates an eolian generator 5 of the type referred to, with the rotating vanes 9 assembled onto the metallic rotor 8, and supported by the same, together with the rod 10 and the tail 11, which rotor 8 in turn is housed and supported into the stationary box-like envelope 6, which is supported onto the upper part of the present metallic support structure 7, in the manner that will be described. This metallic support structure 7 has an extension in the vertical direction, and its component parts are realized and installed to each other as it will be described, and such structure also has a relatively limited height, preferably comprised between about 3 and 20 meters, and is formed by at least a metallic rectilinear lengthened section bar 13 with vertical extent, of tubular shape, or of another suitable geometrical shape, the lower end portion of which is supported by a set of supports 14, 15, 16 and 17, joined in an articulated manner with their respective upper end portions to the vertical section bar 13 and realized as it will be described, as well as distributed uniformly on the ground around the same vertical section bar, and the respective lower end portions of such supports are fixed to correspondent ballast weights, opportunely shaped and anchored in to the ground as it will be described. With this arrangement of the support structure, therefore , the so realized eolian generator 5 is supported on the ground by the vertical section bar 13 always in a balanced condition, thanks to the distribution of the ballasts in an uniformly manner around the vertical section bar 13, and to the masses of such ballasts which are sized for forming counterweights exerting efficient counter-moments against the moments exerted by both the weights of the vertical section bar and the eolian generator 5 supported by it, and by the forces exerted by the wind thrusts against the rotating vanes 9, and by the forces produced by the consequent rotation of such vanes, in a way that this balanced condition be always ensured during the operation of the eolian generator 5, thereby ensuring to the same to operate always in a satisfactory and reliable manner, and preventing any danger of overturning and of non-operation of the same eolian generator. According to the essential characteristic of the invention, all the component parts of the present support structure are formed by a system of rigging stays of nautical type, which is arranged and applied in position for operating as support structure for the eolian generators, which therefore may be installed in position with simple operations and by utilizing lifting equipments of common type, which are different and less complicated and burdensome with respect to the lifting equipments such as hydraulic piston systems, oleo-dynamic systems or the like, which are nowadays used for installing the present support structures for eolian generators of these kinds.

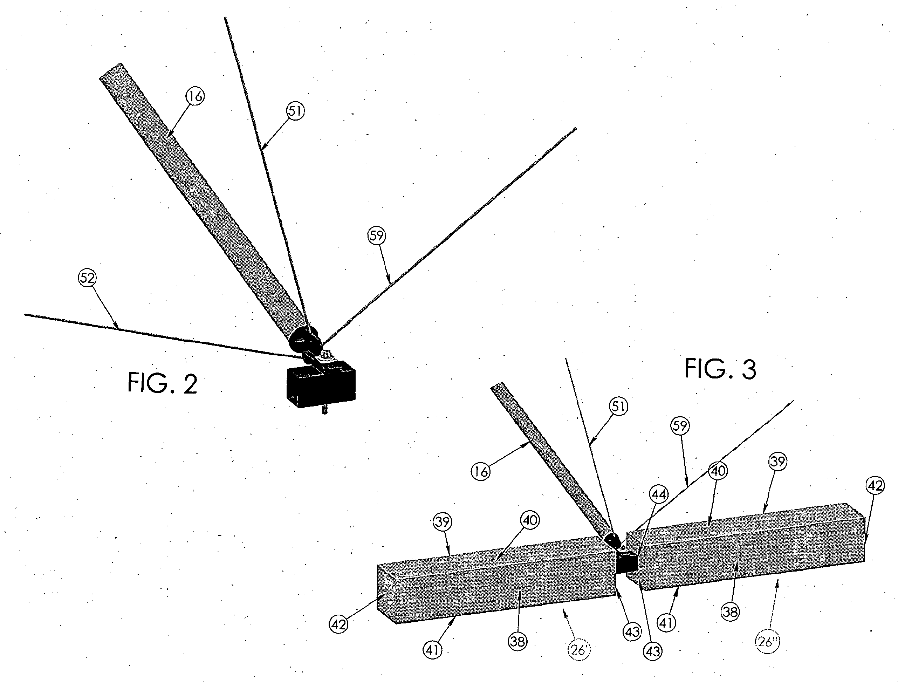

As visible also from Figures 2, 3, 4 and 5, in the illustrated example of the support structure 7 according to the present invention, the four foreseen supports for supporting the vertical metallic section bar 13 are constituted by respective horizontal rectilinear section bars 14, 15, 16 and 17 with the same size, of tubular shape or other suitable geometrical shape, which form some basis struts which are arranged onto a support surface, which may be constituted by the ground or a roof of an inhabited building, and which are distributed in form of spokes around the vertical section bar 13 with the same angular distance, and the end portions converging to each other of such inclined section bars are fixed with a single central plate 18, shaped with an upper flat surface 19, into which two short projected coupling elements 20, 21 are provided, equal and spaced away to each other in the direction of the length of the flat surface 19, for assembling in an articulated manner two additional vertical section bars 22 and 23, having the same length and a tubular shape or another suitable geometrical shape, which vertical section bars are shorter than the vertical section bar 13 and are assembled in an articulated manner onto the plate in positions spaced away to each other, by delimiting a space in which the vertical section bar 13 is placed, without that the lower end portion of this latter comes into contact with the flat plate 18.

In turn, the free end portions of the respective horizontal section bars 14, 15, 16 and 17 are shaped as it will be described, for being articulated with the correspondent ballasts 24, 25, 26 and 27, which are identical to each other and shaped with the same shape and size, in the example they are of parallelepiped shape, but of course they may be shaped with different shapes too, thus without departing from the protection sphere of the present invention.

Each ballast can be realized advantageously as an unique block, as in the case of the ballasts of the Figure 1, or it may be realized with two single blocks identical and joined to each other, as in the case of the ballasts illustrated in the Figures 3, 7-10, wherein however each ballast contains the same weight of ballasting material.

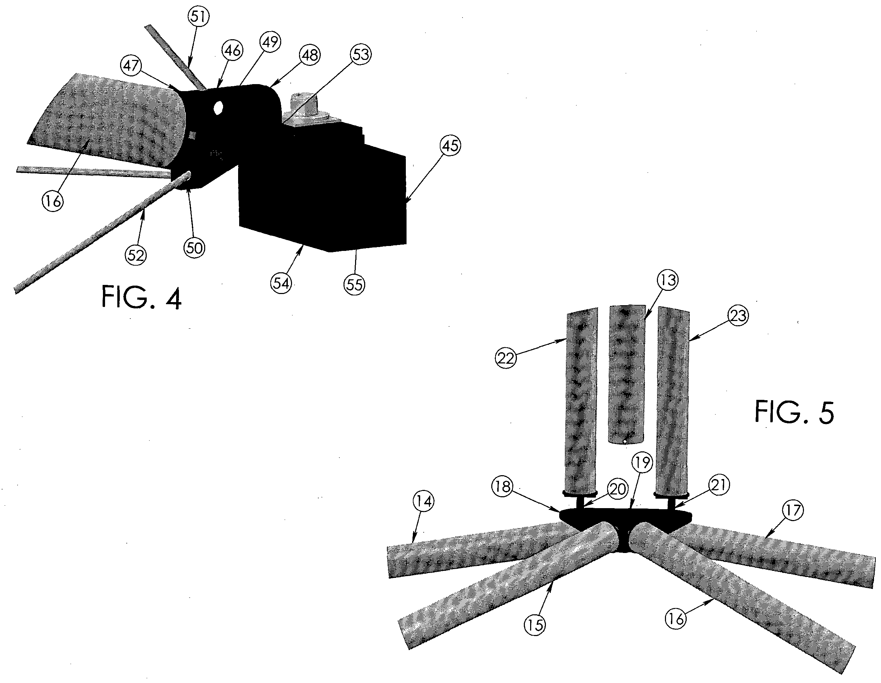

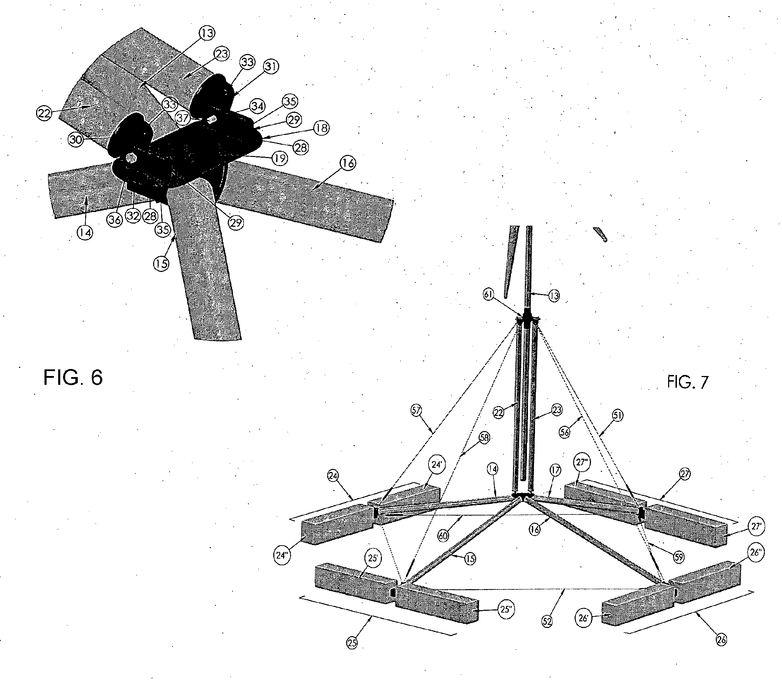

Turning again to the Figures 5 and 6, it is noted that the vertical projected coupling elements 20 and 21 of the central plate 18 are formed by two short flat plates 28 and 29 secured onto the upper flat surface 19 of the same plate and arranged parallel and slightly spaced away to each other in the transversal direction of such plate, thereby delimiting a narrow free space into which a correspondent additional flat plate 30 and 31 may be inserted, which is secured below the free end portion of the relative rectilinear section bar 22 and 23, and provided with two respective transversal through holes 32 and 33, provided in positions correspondent to those of the relative transversal through holes 34 and 35 with which both the flat plates 28 and 29 are provided. In this manner, once all the ballasts 24, 25, 26 and 27 have been arranged in the relative application positions thereof, with a spokes-conformation around the position in which the vertical section bar 13 will be assembled, the additional flat plates 30 and 31 are articulated with the correspondent flat plates 28 and 29 through a relative short pivot 36 and 37, which is inserted into the relative through holes 32 and 34 of such flat plates, and under this condition the lower end portions of the rectilinear section bars 22 and 23 become articulated with the central flat plate 18 and may be bent in an inclined position with respect to the same in the position of Figure 6, together with the central section bar 13, which condition is required during the first phase of assembling of all the component parts of the present support structure, as it will be described hereinafter.

For displacing the rectilinear section bars 22 and 23 in a vertical and upright position, by displacing also the central section bar 13 in the same position, by performing the subsequent assembling phases which will be described, then it is necessary at first to lift such section bars 22 and 23 together with the central section bar 13, by utilizing the equipments that will be described, and in that case the rotation of the section bars 22 and 23 around their pivots 36 and 37 determines the displacement of all the plates with their through holes 33 and 35 into positions coincident to each other, so that also into these through holes some correspondent pivots (not shown) may be inserted, thereby locking into this vertical and upright position the two rectilinear section bars 22 and 23, together with the vertical central section bar 13 (see Figure 5).

By referring now to Figures 2, 3 and 4, it is noted how each horizontal section bar 14, 15, 16 and 17 is realized with its free end portion opportunely shaped, for being articulated with the relative ballast, each one of which in the present example is constituted as already specified by two single blocks of parallelepiped shape, arranged aligned and joined to each other, which are now marked with the respective reference numerals 24', 24", 25', 25", 26', 26" and 27', 27".

For this aim, each ballast block of this kind is substantially constituted by a metallic electric welded net (not illustrated), with the same shape of the relative block, delimiting an internal cavity that is filled in advance with inert material of various kind, in equal quantity and such to obtain the desired weight of each ballast block. Thereafter, once such internal cavity has been completely filled with this inert material, each ballast block is closed along all its sides by relative metallic (or plastic) closing walls, in the example of Figure 3 formed by a front longitudinal wall 38 and by a rear wall 39, by an upper longitudinal wall 40 and by a lower wall 41, and by an external side wall 42 and by an internal side wall 43, wherein the two internal side walls 43 opposed to each other of two ballast blocks adjacent to each other are joined to each other by a junction piece 44, welded at both these side walls, onto which a metallic articulation element 45 is secured in advance in an overlapped and interposed position, which is shaped as it will be described and provided for receiving the shaped end portion of the relative horizontal rectilinear section bar.

As visible particularly from the Figures 2, 3 and 4, the free end portion of each inclined section bar (in the example constituted by the section bar 16) is shaped with a narrow vertical plate 46, formed by a tail 47 joined with the terminal part of the tubular section bar and that is extended with a slightly tapered head 48, into which there are provided at least two through holes 49 and 50 along the opposed sides of the same head, for allowing the passage of correspondent metallic stays 51 and 52 for supporting the support structure of the eolian generator. Moreover, in the Figure 4 it is noted that the tapered end portion of the head 48 is supported on and fixed to an horizontal plate 53, in turn fixed onto the upper part of the articulation element 45, the lower part of which is shaped as a square-shaped hollow sleeve 54, the longitudinal through opening 55 of which is inserted into and joined on to above-mentioned correspondent junction piece 44.

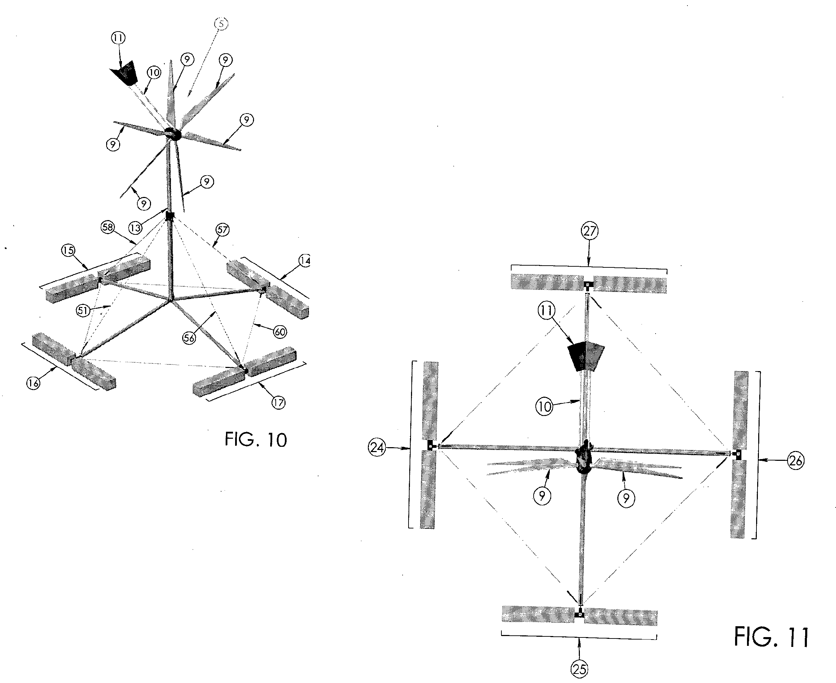

Obviously, the fixing of the free end portion of each horizontal section bar 14-17 with the articulation element 45 may be performed also in a different manner with respect to that indicated by way of example only, thus without departing from the protection sphere of the present invention. Figures 7-9 now show the different assembling phases of the support structure 7 according to the present invention, for installing an eolian generator 5 in the foreseen installation position, and the Figure 10 shows the eolian generator 5 with the relative installed support structure 7. From such Figures, it is noted that the reciprocal junction of all the component parts of the support structure 7 is effected by using a plurality of metallic stays, which are first inserted with their end portions into correspondent through holes (not indicated) provided through the relative end portions of the different component parts, and then such stays are stretched in a manner to support all the component parts in an upright position. In the Figure 7 it is noted that the stays used to join the end portions of the different component parts of the supports structure 7 are marked with the reference numerals 51, 52, 56, 57, 58, 59 and 60, and in particular the stays 51 and 56 are directed in an inclined direction and join the respective horizontal rectilinear section bars 16 and 17 with the upper part of the vertical rectilinear section bar 13, whereas the stays 57 and 58 are also directed in an inclined direction and join the respective horizontal rectilinear section bar 14 and 15 with the upper part of the vertical rectilinear section bar 22. Besides, in such case, the central vertical section bar 13 supporting the eolian generator 5 is supported by an horizontal hinging element 61, of removable type, provided with three through holes adjacent and separated from each other (not indicated), through which the above-mentioned three vertical section bars 13, 22 and 23 are let to pass, in a manner that such hinging element 61 supports all these section bars in an aligned and joined position thereof, and that therefore these section bars may be shifted at the same time from the one to the other one of their inclined and upright positions.

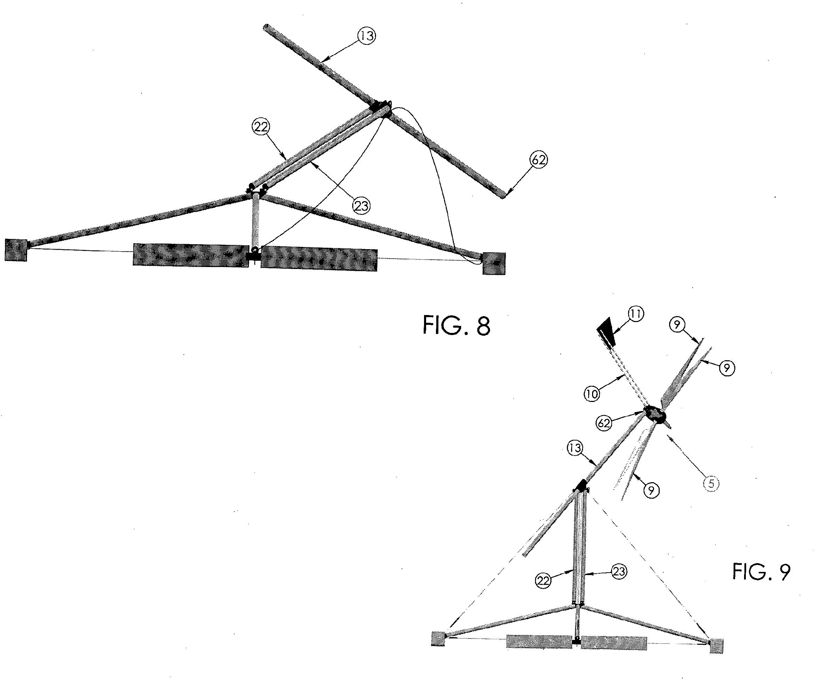

In turn, the stays 52, 59 and 60 are directed in the horizontal direction and join the horizontal section bars 14-17 to each other, and in particular the stay 52 joins the two section bars 15 and 16, the stay 59 joins the two section bars 16 and 17 and the stay 60 joins the two section bars 17 and 14, but naturally the arrangement of the stays and their junction with the different component parts of the present support structure 7 may be effected also in different manners than those indicated by way of example only, provided that the same result be always achieved, thus without departing from the protection sphere of the present invention. Figures 8 and 9 show two different assembling phases of the support structure 7 by using the above-described stays, and in particular in the phase of Figure 8 it is noted that the different ballasts 24, 25, 26 and 27 are at first placed in the respective application positions thereof, in this case onto the roof of an inhabited building, onto which it is not necessary that the same be anchored, while all the specified stays are joined with the various component parts of the support structure 7, however they are maintained loosen and not stretched among the same component parts, and under this condition the hinging element 61, which is applied onto the three section bars 13, 22 and 23, is also maintained loosen onto the same section bars, so that the two section bars 22 and 23 which are hinged to the flat plate 18 are arranged inclined with respect to the same plate, while the section bar 13 which is loose and articulated with respect to the section bars 22 and 23 may be overturned with respect to these latter, and shifted downward with its upper part 62, for fixing then onto this latter the eolian generator 5. Then, in the subsequent assembling phase of the Figure 9, after that the eolian generator 5 has been fixed with traditional fixing means onto the upper part 62 of the section bar 13, this latter is overturned from the inclined position of Figure 8 and gradually shifted toward its vertical upright position, by acting on to the various stays for determining the shifting of the section bar 13 in this position, with consequent gradual shifting of the eolian generator in the same direction, toward the ultimate operative position thereof. When the overturning of the section bar 13 is ended, in which this latter is shifted in its vertical upright position, see Figures 7 and 10, all the stays are stretched with such stretches as to maintain all the component parts, together with the hinging element 61, always correctly joined, positioned, stable and balanced to each other, thereby ensuring to the eolian generator 5 to operate under all the operative conditions and all the foreseen meteorological conditions, thus without that the support structure 7 and the various component parts of the eolian generator 5 may be never displaced from this position. The actions exerted on to the section bars and the ballast as well as the eolian generator for their displacements, are performed by using preferably a traditional manually actuated winch, which is from time to time coupled to the various parts to be lowered, inclined, lifted, and overturned, which involves a limited encumbrance and may be handled, assembled and disassembled in an easy and quick manner, thereby preventing the use of some expensive and encumbering hydraulic systems, oleo-dynamic systems etc..., as hitherto was necessary to do for installing the present support structures for the eolian generators. In turn, the arrangement to the same level of all the component parts of the support structure in their installation position, is effected by acting on to the stays through simple cable stressing devices.

The advantages deriving by the use of this support structure consist also in the very lower total costs, which can be estimated to be about one-third of the costs of an analogue support structure existing at the present on the market, as well as in the possibility to be able to assemble in advance in the workshop all the ballasts and to use the ballast materials such as the inert materials which can be found easily and are less expensive.

Furthermore, thanks to the use of very wide rigging stays, a rigid structure with moment of inertia is obtained, thereby allowing that the central section bar or pole 13 be very thin, with consequent saving of material and labour costs for manufacturing this central section bar.

By returning again to Figure 1, in which as already described all the ballasts are realized as a single block, it is noted that also such ballasts are formed by a metallic electric welded net 63 with the same shape of the block, the internal cavity of which is again filled with inert material, and into the same a relative metallic rod 64 is secured for stiffening the structure and for fixing the respective free end portion of the horizontal section bars 14-17. Thereafter, also here each ballast block is closed at all sides with peripheral metallic walls (not shown), and also in this case there are used the same horizontal and vertical section bars as well as the same above-described stays, which therefore are marked with the same preceding reference numerals.

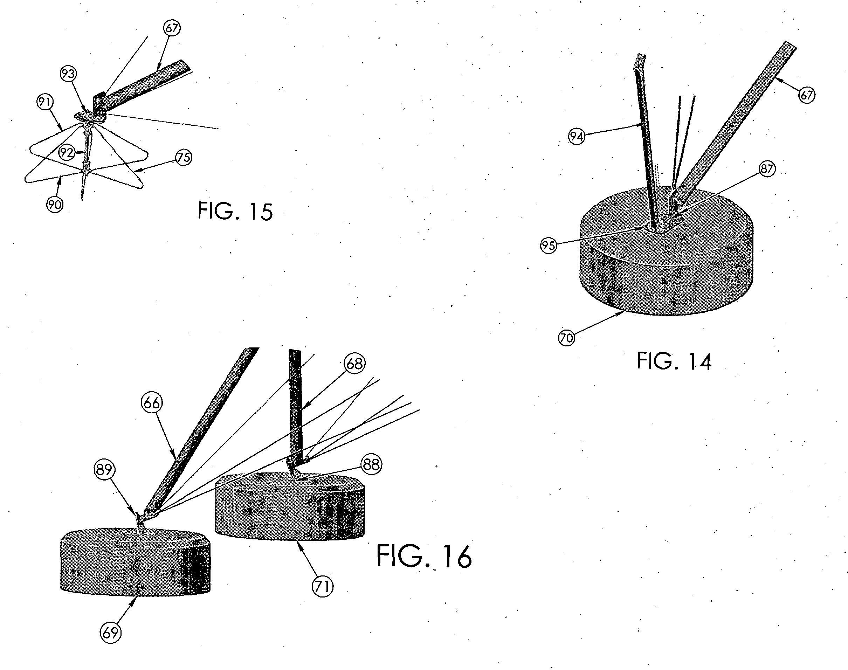

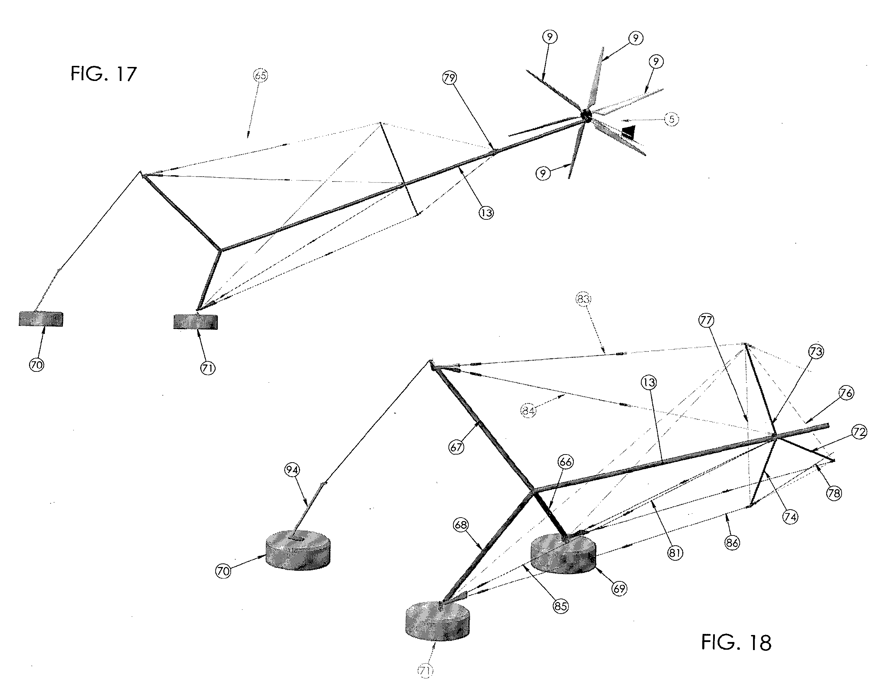

Referring to Figures 12-21, a second example of a support structure 65 is now shown, and in particular the Figures 14-16 illustrate the conformations of the ballasts of the present support structure, realized in a different manner with respect to the previous ones, the Figures 12 and 13 illustrate the support structure assembled with the relative eolian generator, and the Figures 17-21 show different assembling and installation phases of the support structure and the eolian generator.

From Figures 12 and 13 it is noted that the support structure 65 is always constituted by a lengthened vertical rectilinear section bar 13, preferably of tubular shape, or also with another suitable geometrical shape, onto the upper end portion thereof the eolian generator 5 is secured and supported, and the lower end portion of which is raised from the ground and is hinged removably with three rectilinear section bars 66, 67 and 68 inclined as a strut, and having the same length, also with a tubular shape or also with another suitable shape, which are spaced away to each other of the same angular distance, thereby forming an equilateral triangle, and the free end portions of such inclined section bars 66, 67 and 68 are articulated with a respective ballast made in concrete 69, 70 and 71, as it will be described.

Even in this case the support structure 65 is constituted by a plurality of metallic stays, which join to each other all the rectilinear section bars 13, 66, 67 and 68, and the ballasts 69, 70 and 71 and these stays are also joined at a determined height with three additional rectilinear section bars 72, 73 and 74, with the same length and shorter than the preceding section bars, which have also a tubular shape or another suitable geometrical shape, and are spaced away to each other of the same angular distance, thereby forming an equilateral triangle, and act as rigging stays for the vertical lengthened section bar or pole 13.

Figure 14 shows one of the ballasts of the present support structure, for example the ballast 70, with a portion of the relative inclined section bar 67 that is articulated with the same ballast, whereas the Figure 15 shows the internal metallic armature 75 for forming such ballast made in concrete, together with a portion of the relative inclined section bar 67 that is articulated with the same ballast, and the Figure 16 shows the other two ballasts 69 and 71 with a portion of the relative inclined section bars 66 and 68.

As visible from the Figures 12 and 13, and in detail from the Figures 18, 20 and 21, in which the lower portion of the support structure 65 is shown, the rectilinear section bars acting as rigging stays 72, 73 and 74 are hinged with the vertical central section bar 13 and the free end portions of said rectilinear section bars are joined to each other through respective rectilinear stays 76, 77 and 78 inserted into correspondent through holes (not indicated) of these free end portions. Additional stays are provided for joining the different section bars of the support structure, and in particular there are provided some inclined stays directed downward, for joining the free end portions of the upper rectilinear section bars (rigging stays) 72, 73 and 74 with the free end portions of the respective lower inclined section bars 66, 67 and 68, and some inclined stays directed upward, for joining all the free end portions of such upper rectilinear section bars 72, 73 and 74 with the vertical central section bar 13, in an unique position 79 obtained along the same central section bar, at a height shorter than the upper height 80 of said central section bar 13, in which the eolian generator is fixed and supported. In the indicated example, stays 81 and 82 are provided for joining the free end portions of the upper rectilinear section bar 72 with the end portion of the lower section bar 66, the stays 83 and 84 for joining the free end portions of the upper section bar 73 with the end portion of the lower section bar 67, the stays 85 and 86 for joining the free end portions of the upper section bar 74 with the end portion of the lower section bar 68. Naturally, the stays may be provided also with arrangements and quantities different than those indicated by way of non-limiting example only, for joining to each other all the section bars, always for obtaining as a result a structure with all the characteristics and advantages of the structure previously described, thus without departing from the protection sphere of the present invention.

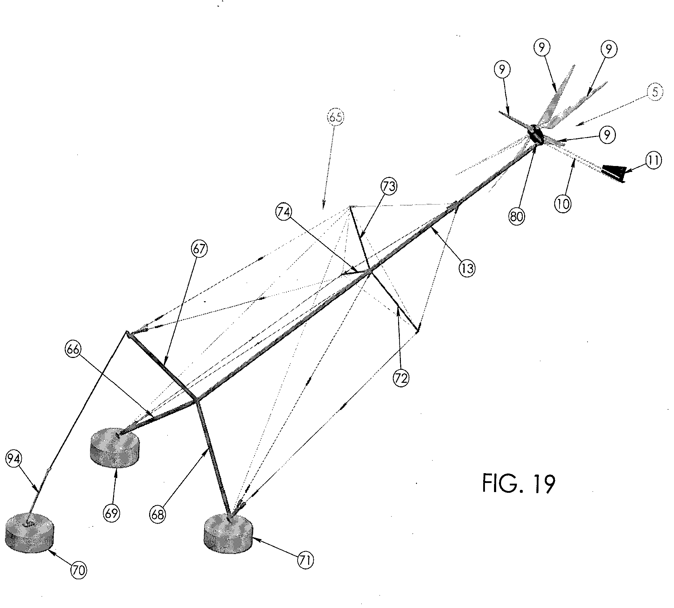

Referring now to the Figures 14 and 16, in which the ballasts made in concrete 70, 71 and 69 as already specified are indicated, it is noted that the same are shaped with a cylindrical shape and provided with a metallic coupling element 87, 88 and 89, respectively, included into the concrete and shaped for coupling and fixing the respective section bars 66, 68 and 67 inclined as a strut during the assembling of the support structure. Each ballast is realized by assembling at first the different component parts 90, 91 and 92 of the armature 75 of the same ballast to each other (see Fig. 15), then by inserting the terminal tip 93 of the vertical pole 92 constituting this armature through a correspondent through hole (not indicated), provided through the relative metallic coupling element for the lower inclined section bar, and by preparing an appropriate form (not shown) for each ballast, for pouring then the concrete around the armature 75, in a manner to form the ballast with the relative coupling element included therein. Each form is at first arranged in the relative application position thereof, provided by digging the ground for a sufficient depth for obtaining the ballasts with the desired thickness and with their upper surface at the ground level, and subsequently by pouring the concrete with the pre-established quantities into the different forms, and letting the same concrete to harden, before starting to assemble the support structure. Also in this case, the structure is installed with the same operative phases previously described, that is by lowering at first all the component parts of the structure joined to each other in a loose manner with the above described stays and shrouds (see Figures 17 and 18), so as to fix the eolian generator 5 onto the upper tip 80 of the rectilinear section bar 13, and then by lifting gradually all the component parts (see Figure 19), up to arrange them in the vertical upright position thereof (see Figures 12, 13, 20 and 21), in which thereafter all the stays and all the shrouds are pulled also through the cable stretching devices. For performing the lowering and the lifting of the various component parts of the present support structure, it is used at least a lifting winch with multi-pulleys of traditional type, marked with the reference numeral 94, that during the use thereof is anchored to an appropriate plate 95 also included into at least one of the ballasts, which in the indicated example is the ballast 70, and at the end of the assembling phases such winch is disassembled, so as to let free the upper surfaces of all the ballasts so applied in position.

## Claims

1. Support structure for electric energy eolian generators of various kind, particularly for being installed on inhabited environments, and arranged for operating also under conditions of strong wind, in order to generate electric energy for the use in the same inhabited residences, or also for being used by other users, wherein each eolian generator (5) is substantially constituted by a synchronous electric generator, formed by a movable circular rotor and by a fixed circular stator, both contained in a metallic and fixed box-like envelope (6), supported on the metallic support structure (7 ; 65), and a metallic rotor (8) is housed and supported into the box-like envelope (6), and is rotating with respect to this latter, and is mechanically joined with the electric generator rotor and supporting some rotating vanes (9), the generator being also constituted by at least one rectilinear and lengthened metallic rod (10) provided with a tail (11), and fixed to the upper end portion of at least a first vertical rectilinear lengthened metallic section bar (13), the lower end portion of which is supported by support means (14, 15, 16, 17 ; 66, 67, 68), joined in an articulated manner with said vertical section bar (13) and distributed uniformly on the ground all around the same vertical section bar, together with corresponding ballast means (24, 25, 26, 27 ; 69, 70, 71) or with pairs of ballast blocks (24', 24" ; 25', 25" ; 26', 26" ; 27', 27") identical and joined to each other, constituted by ballast material and applicable on the roofs of buildings or in the ground, in a manner that the support structure (7 ; 65) with the relative said eolian generator (5) be always supported in a balanced condition, the support structure (6; 65) being also formed by a system of rigging stays of nautical kind, comprising tensioning cable means (51, 52, 56-60 ; 76, 77, 78, 81-86) fixed to said vertical rectilinear section bar (13), said support means (14, 15, 16, 17 ; 66, 67, 68) and said ballast means (24, 25, 26, 27 ; 69, 70, 71), said support structure (7 ; 65) being able to be installed in position by movable raising and lowering equipment (winches 94) and means for tensioning cables, acting on to the different component parts of the same support structure, in a manner to arrange preferably firstly said ballast means (24, 25, 26, 27 ; 69, 70, 71) in the application positions and then to lower said vertical bar section (13), so as to secure said eolian generator (5) by traditional means on the upper part of the same section bar, and finally to raise said vertical section bar (13) in the upright position, with said eolian generator (5) and said support means (14, 15, 16, 17 ; 66, 67, 68), with subsequent tensioning of all the relative cables (stays), **characterized in that** said support means are constituted by respective horizontal rectilinear section bars (14, 15, 16, 17) of the same size, forming base struts which are arranged on the relative support surface, preferably on the roof of an inhabited building, and arranged in form of spokes around said vertical section bar (13) with the same angular distance, and the end portions converging to each other of said horizontal section bars (14, 15, 16, 17) being fixed with a central plate (18), in the upper surface of which there are provided two short projected coupling elements (20, 21), for mounting in an articulated manner two additional vertical section bars (22, 23) having the same length and which are shorter than said section bar (13), by defining between them a space in which the same vertical section bar is arranged, without that the lower end portion of this latter comes into contact with said plane plate (18), the free end portions of the relative said horizontal section bars (14, 15, 16, 17) being articulated with said ballast means (24, 25, 26, 27), and the free end portions of said additional vertical section bars (22, 23) being supported by hinging means (61), together with said vertical section bar (13), in a manner to allow an articulated movement of this latter from the lowered position to the raised position thereof, and vice versa, with respect to said additional vertical section bars (22, 23).

2. Support structure according to claim 1, wherein said lengthened rectilinear vertical section bar (13) has the lower end portion which is lifted up from the ground and removably hinged with at least three rectilinear section bars inclined as a strut (66, 67, 68) of the same length, constituting said support means (66, 67, 68), which are spaced away of the same angular distance from each other, thus forming an equilateral triangle, and the free end portions of said rectilinear inclined section bars (66, 67, 68) being joined with said ballast means (69, 70, 71), which are inserted in the ground, **characterized in that** said rectilinear vertical section bar (13) is hinged at a determinate height also with three additional rectilinear section bars (72, 73, 74), having the same length and which are shorter than the previous section bars, which are spaced away from the same angular distance from each other, thus forming and equilateral triangle, and acting as support shrouds for said lengthened vertical section bar or shaft (13), and are joined to each other and to said inclined section bars (66, 67, 68) and said ballast means (69, 70, 71), by said tensioning cable means (76, 77, 78 ; 81-86).

3. Support structure according to claim 2, **characterized in that** said ballast means (69, 70, 71) comprise at least three concrete ballasts (69, 70, 71) provided with a respective metallic coupling element (89, 87 and 88), included into the concrete and provided for fixing the respective inclined section bars (66, 67 and 68), each ballast being obtained by using at least a metallic armature (75) and by preparing and arranging at first an appropriate formwork around this latter, in the relative application position thereof, which is obtained by digging the ground for a depth sufficient to obtain the ballasts with the desired thickness and with their upper surface at the ground level, and subsequently by pouring the concrete in pre-established quantities in the different formworks, and by letting the same concrete to harden, before to start to assemble the support structure.

## Patentansprüche

1. Stützstruktur für Windenergiegeneratoren verschiedener Art, insbesondere zum Errichten in bewohnten Umgebungen, angeordnet zum Betrieb auch unter Bedingungen starken Windes, um elektrische Energie zum Verbrauch in den bewohnten Wohnungen zu erzeugen, ebenso zum Verbrauch durch andere Benutzer, wobei jeder Windgenerator (5) im wesentlichen durch einen synchronen elektrischen Generator gebildet ist, gebildet durch einen beweg-baren kreisförmigen Rotor und einen feststehenden kreisförmigen Stator, die beide in einem metallischen, feststehenden, box-ähnlichen Gehäuse (6) untergebracht sind, gehalten auf der metallischen Stützstruktur (7; 65), wobei ein metallischer Rotor (8) in dem box-ähnlichen Gehäuse (6) untergebracht und gehalten ist und gegenüber diesem rotiert, mechanisch verbunden mit dem elektrischen Generatorrotor und mit einigen rotierenden Flügeln (9) versehen, wobei der Generator auch durch wenigstens eine geradlinige, lang gestreckte metallische Stange (10) mit einem Endstück (11) gebildet ist und an dem oberen Endabschnitt wenigstens einer ersten vertikalen, geradlinigen, langgestreckten Profilstange (13) befestigt ist, deren unterer Endabschnitt von Stützmitteln (14, 15, 16, 17; 66, 67, 68) gehalten ist, die auf gelenkige Weise mit der vertikalen Profilstange (13) verbunden sind und gleichmäßig auf dem Boden um die vertikale Profilstange verteilt sind, zusammen mit zugehörigen Ballastmitteln (24, 25, 26, 27; 69, 70, 71) oder mit Paaren von Ballastblöcken (24', 24"; 25', 25"; 26', 26"; 27', 27"), die identisch und miteinander verbunden sind, gebildet durch Ballastmaterial und anwendbar auf die Dächer von Gebäuden oder in dem Boden, auf eine Weise, dass die Stützstruktur (7; 65) mit dem zugehörigen Windgenerator (5) stets in einem Gleichgewichtszustand gestützt ist, wobei die Stützstruktur (6; 65) auch durch ein System von Spannstreben nautischer Art gebildet ist, mit spannbaren Kabelmitteln (51, 52, 56 - 60; 76, 77, 78, 81 - 86), die an der vertikalen, geradlinigen Profilstange (13) befestigt sind, wobei die Stützmittel (14, 15, 16, 17; 66, 67, 68) und die Ballastmittel (24, 25, 26, 27; 69, 70, 71) der Stützstruktur (7; 65) ausgelegt sind, durch eine bewegbare Hub- und Senkausrüstung (Winden 94) und durch Mittel zum Spannen von Kabeln in Position installiert zu werden, die auf die verschiedenen Bauteile der Stützstruktur auf eine Weise einwirken, das vorzugsweise zuerst die Ballastmittel (24, 25, 26, 27; 69, 70, 71) in der Gebrauchsposition angeordnet werden und dann die vertikale Profilstange (13) abgesenkt wird, um den Windgenerator (5) durch traditionelle Mittel an dem oberen Abschnitt der Profilstange zu befestigen, und schließlich die vertikale Profilstange (13) in die aufrechte Position anzuheben, mit dem Windgenerator (5) und den Stützmitteln (14, 15, 16, 17; 66, 67, 68) mit nachfolgendem Spannen aller zugehörigen Kabel (Streben),
**dadurch gekennzeichnet,**
**dass** die Stützmittel durch zugehörige horizontale, geradlinige Profilstangen (14, 15, 16, 17) derselben Größe gebildet sind, die Basisstreben bilden, die auf der zugehörigen Stützfläche angeordnet sind, vorzugsweise auf dem Dach eines Wohngebäudes, und angeordnet in der Form von Speichen, um die vertikale Profilstange (13) mit demselben Winkelabstand, wobei die Endab-schnitte der horizontalen Profilstangen (14, 15, 16, 17) aufeinander zu laufen und an einer zentralen Platte (18) befestigt sind, in deren oberer Fläche zwei kurze, vorstehende Kupplungselemente (20, 21) angeordnet sind, um zwei zusätzliche vertikale Profilstangen (22, 23) derselben Länge, die kürzer sind als die Profilstange (13) auf gelenkige Weise zu befestigen, wobei zwischen ihnen ein Raum begrenzt ist, in dem die vertikale Profilstange angeordnet ist, ohne dass der untere Endabschnitt der letzteren in Kontakt mit der ebenen Platte (18) kommt, wobei die freien Endabschnitte der zugehörigen horizontalen Profilstangen (14, 15, 16, 17) gelenkig mit den Ballastmitteln (24, 25, 26, 27) verbunden sind und die freien Endabschnitte der zusätzlichen vertikalen Profilstangen (22, 23) von Gelenkmitteln (61) zusammen mit der vertikalen Profilstange (13) auf eine Weise gehalten sind, dass die letztere eine gelenkige Bewegung aus der abgesenkten Position in eine angehobene Position und umgekehrt gegenüber den zusätzlichen vertikalen Profilstangen (22, 23) ausführen kann.

2. Stützstruktur nach Anspruch 1, wobei die langgestreckte, geradlinige, vertikale Profilstange (13) mit ihrem unteren Endabschnitt von dem Boden angehoben ist und entfernbar mit wenigstens drei geradlinigen Profilstangen verbunden ist, die als eine Verstrebung (66, 67, 68) derselben Länge geneigt ist, und die Stützmittel (66, 67, 68) bilden, die in demselben Winkelabstand voneinander beabstandet sind und somit ein gleichwinkliges Dreieck bilden, wobei die freien Endabschnitte der geradlinigen, geneigten Profilstangen (66, 67, 68) mit den Ballastmitteln (69, 70, 71) verbunden sind, die in den Boden eingesetzt sind,
**dadurch gekennzeichnet,**
**dass** die geradlinige vertikale Profilstange (13) in einer bestimmten Höhe außerdem mit drei zusätzlichen geradlinigen Profilstangen (72, 73, 74) gelenkig verbunden ist, die dieselbe Länge haben und kürzer sind als die vorigen Profilstangen, die in demselben Winkelabstand voneinander beab-standet sind und somit ein gleichschenkliges Dreieck bilden und als eine Stützummantelung für die langgestreckte vertikale Profilstange oder Welle (13) wirken und miteinander verbunden sind und durch gespannte Kabelmittel (76, 77, 78; 81 - 86) mit den geneigten Profilstangen (66, 67, 68) und den Ballastmitteln (69, 70, 71) verbunden sind.

3. Stützstruktur nach Anspruch 2,
**dadurch gekennzeichnet,**
**dass** die Ballastmittel (69, 70, 71) wenigstens drei Betonballaste (69, 70, 71) aufweisen, die mit zugehörigen metallischen Kupplungselementen (89, 87 und 88) versehen sind, die in den Beton eingelassen sind, um die zugehörigen geneigten Profilstangen (66, 67 und 68) zu fixieren, wobei jeder Ballast erhalten wird durch Verwendung wenigstens einer metallischen Bewehrung (75) und durch Vorbereiten und Anordnen zunächst eines geeigneten Formwerks um die letztere, in der zugehörigen Anwendungsposition, wobei dies erhalten wird durch Graben des Bodens in einer ausreichenden Tiefe, um die Ballaste mit der gewünschten Dicke zu erhalten, wobei ihre Oberflächen mit dem Bodenniveau übereinstimmen, und anschließendes Gießen des Betons in vorbestimmter Menge in die verschiedenen Formwerke und durch Erhärten des Betons, bevor die Stützstruktur montiert wird.

## Revendications

1. Structure de support pour générateurs éoliens d'énergie électrique de différents types, en particulier destinée à être installée dans des environnements habités, et agencée pour fonctionner également dans des conditions de vent fort, afin de générer de l'énergie électrique pour qu'elle soit utilisée dans ces mêmes résidences habitées, ou également pour être utilisée par d'autres utilisateurs, dans laquelle un tel générateur éolien (5) est sensiblement constitué par un générateur électrique synchrone, formé par un rotor circulaire mobile et par un stator circulaire fixe, tous deux contenus dans une enveloppe métallique et fixe en forme de boîte (6), supportée sur la structure de support métallique (7 ; 65), et un rotor métallique (8) est logé et supporté dans l'enveloppe en forme de boîte (6), et tourne par rapport à cette dernière, et est mécaniquement assemblé au rotor de générateur électrique et supportant certaines pales rotatives (9), le générateur étant également constitué par au moins une tige métallique rectiligne et allongée (10) prévue avec une queue (11), et fixée sur la partie d'extrémité supérieure d'au moins une première barre transversale métallique allongée rectiligne verticale (13), dont la partie d'extrémité inférieure est supportée par des moyens de support (14, 15, 16, 17 ; 66, 67, 68), assemblée d'une manière articulée avec ladite barre transversale verticale (13) et répartie uniformément sur le sol tout autour de la même barre transversale verticale, conjointement avec des moyens de ballast (24, 25, 26, 27 ; 69, 70, 71) correspondants ou avec des paires de blocs de ballast (24', 24" ; 25', 25" ; 26', 26" ; 27', 27") identiques et assemblés entre eux, constitués par un matériau de ballast et applicables sur les toits des bâtiments ou dans le sol, de sorte que la structure de support (7 ; 65) avec ledit générateur éolien (5) relatif soit toujours supportée dans une condition équilibrée, la structure de support (6 ; 65) étant également formée par un système de haubans de gréement de type nautique, comprenant des moyens de câble de tension (51, 52, 56-60 ; 76, 77, 78, 81-86) fixés sur ladite barre transversale rectiligne verticale (13), lesdits moyens de support (14, 15, 16, 17 ; 66, 67, 68) et lesdits moyens de ballast (24, 25, 26, 27 ; 69, 70, 71), ladite structure de support (7 ; 65) pouvant être installée en position par un équipement de levage et d'abaissement mobile (treuils 94) et des moyens pour tendre les câbles, agissant sur les différentes parties de composant de la même structure de support, afin d'agencer de préférence, dans un premier temps, lesdits moyens de ballast (24, 25, 26, 27 ; 69, 70, 71) dans des positions d'application et ensuite d'abaisser ladite section de barre verticale (13), afin de fixer ledit générateur éolien (5) avec des moyens traditionnels sur la partie supérieure de cette même barre transversale, et finalement de lever ladite barre transversale verticale (13) dans la position verticale, avec ledit générateur éolien (5) et lesdits moyens de support (14, 15, 16, 17 ; 66, 67, 68), avec la tension successive de tous les câbles (haubans) relatifs, **caractérisée en ce que** lesdits moyens de support sont constitués par des barres transversales rectilignes horizontales (14, 15, 16, 17) respectives de la même taille, formant des jambes de force de base qui sont agencées sur la surface de support relative, de préférence sur le toit d'un bâtiment habité, et agencées sous forme de rayons autour de ladite barre transversale verticale (13) avec la même distance angulaire, et les parties d'extrémité convergeant entre elles desdites barres transversales horizontales (14, 15, 16, 17) étant fixées avec une plaque centrale (18), dans la surface supérieure de laquelle, se trouvent deux éléments courts de couplage en saillie (20, 21) pour monter, de manière articulée, deux barres transversales verticales (22, 23) supplémentaires ayant la même longueur et qui sont plus courtes que ladite barre transversale (13), en définissant entre elles un espace dans lequel cette même barre transversale est agencée, sans que la partie d'extrémité inférieure de cette dernière ne vienne en contact avec ladite plaque plane (18), les parties d'extrémités libres desdites barres transversales horizontales (14, 15, 16, 17) relatives étant articulées avec lesdits moyens de ballast (24, 25, 26, 27) et les parties d'extrémité libres desdites barres transversales verticales supplémentaires (22, 23) étant supportées par des moyens de charnière (61), conjointement avec ladite barre transversale verticale (13), afin de permettre un mouvement articulé de cette dernière de sa position abaissée à sa position levée et vice versa, par rapport auxdites barres transversales verticales supplémentaires (22, 23).

2. Structure de support selon la revendication 1, dans laquelle ladite barre transversale verticale rectiligne allongée (13) a la partie d'extrémité inférieure qui est levée du sol et articulée, de manière amovible, avec au moins trois barres transversales rectilignes inclinées comme une jambe de force (66, 67, 68) de la même longueur, constituant lesdits moyens de support (66, 67, 68), qui sont espacés avec la même distance angulaire les uns des autres, formant ainsi un triangle équilatéral, et les parties d'extrémité libres desdites barres transversales inclinées rectilignes (66, 67, 68) étant assemblées avec lesdits moyens de ballast (69, 70, 71), qui sont insérés dans le sol, **caractérisé en ce que** ladite barre transversale verticale rectiligne (13) est articulée à une hauteur déterminée également avec trois barres transversales rectilignes supplémentaires (72, 73, 74) ayant la même longueur et qui sont plus courtes que les précédentes barres transversales, qui sont espacées avec la même distance angulaire les unes des autres, formant ainsi un triangle équilatéral et servant de flasques de support pour ladite barre transversale verticale allongée ou arbre (13), et sont assemblées entre elles et avec lesdites barres transversales inclinées (66, 67, 68) et lesdits moyens de ballast (69, 70, 71), par lesdits moyens de câble de tension (76, 77, 78 ; 81-86).

3. Structure de support selon la revendication 2, **caractérisée en ce que** lesdits moyens de ballast (69, 70, 71) comprennent au moins trois ballasts en béton (69, 70, 71) prévus avec un élément de couplage métallique (89, 87 et 88) respectif, inclus dans le béton, et prévus pour fixer les barres transversales inclinées (66, 67 et 68) respectives, chaque ballast étant obtenu en utilisant au moins une armature métallique (75) et en préparant et en agençant un premier coffrage approprié autour de cette dernière, dans sa position d'application relative, qui est obtenue en creusant le sol sur une profondeur suffisante pour obtenir les ballasts avec l'épaisseur souhaitée et avec leur surface supérieure au niveau du sol, et ensuite en coulant le béton selon des quantités préétablies dans les différents coffrages, et en laissant ce même béton durcir, avant de commencer à assembler la structure de support.
